# EUROPÄISCHE PATENTSCHRIFT

(11) **EP 2 094 593 B1**
(45) Veröffentlichungstag und Bekanntmachung des Hinweises auf die Patenterteilung: **04.08.2010**
(21) Anmeldenummer: 07846551.5
(22) Anmeldetag: 09.11.2007
(51) Int. Cl.: B65G 49/02, B62D 65/18, C25D 17/06

(54) **WERKSTÜCKTRÄGER ZUM FÖRDERN EINES ZU LACKIERENDEN WERKSTÜCKS**
WORKPIECE CARRIER FOR CONVEYING A WORKPIECE TO BE PAINTED
PORTE-PIÈCE POUR LE TRANSPORT D'UNE PIÈCE À PEINDRE

(30) Priorität: 23.11.2006 DE 102006055297
(43) Veröffentlichungstag der Anmeldung: 02.09.2009
(73) Patentinhaber: Dürr Systems GmbH, 74321 Bietigheim-Bissingen (DE)
(72) Erfinder: WESCHKE, Jürgen, 71263 Weil der Stadt (DE); ORTLIEB, Konrad, 70186 Stuttgart (DE); KISI, Hidayet, 74074 Heilbronn (DE); TELGEN, Thomas, 26871 Papenburg (DE)
(74) Vertreter: Hörner, Andreas
(86) Internationale Anmeldenummer: PCT/EP2007/009723
(87) Internationale Veröffentlichungsnummer: WO 2008/061641

(56) Entgegenhaltungen:
- EP-A- 0 581 687
- DE-A1-102004 011 254
- DE-C1- 4 041 211
- DE-C1- 19 839 725
- FR-A- 2 756 815

## Beschreibung

Die vorliegende Erfindung betrifft einen Werkstückträger zum Fördern eines zu lackierenden Werkstücks, insbesondere einer Fahrzeugkarosserie, durch mindestens ein Elektrotauchlackierbad und mittels mindestens einer auf das Elektrotauchlackierbad folgenden Fördervorrichtung, der mindestens eine elektrische Kontaktiereinrichtung zum Einleiten eines Beschichtungsstroms in das Werkstück beim Hindurchfördern des Werkstücks durch das Elektrotauchlackierbad und mindestens eine Kontaktfläche, an welcher der Werkstückträger mit der auf das Elektrotauchlackierbad folgenden Fördervorrichtung in Kontakt kommt, umfasst.

Solche Werkstückträger sind aus dem Stand der Technik bekannt und können insbesondere als Skidrahmen ausgebildet sein.

Unter einem "Skidrahmen" ist dabei ein Werkstückträger zu verstehen, der mindestens zwei Skidkufen umfasst, welche längs der Förderrichtung des Werkstücks ausgerichtet und quer zur Förderrichtung des Werkstücks voneinander beabstandet sind, wobei jede Skidkufe eine Kontaktfläche zum Abstützen des Skidrahmens an der Fördervorrichtung aufweist.

Dabei können die Skidkufen des Skidrahmens direkt an das Werkstück montiert werden, so dass das Werkstück selbst die Verbindung der Skidkufen untereinander übernimmt. Der Begriff "Skidrahmen", wie er in dieser Beschreibung und in den beigefügten Ansprüchen verwendet wird, umfasst auch eine solche Konfiguration, bei welcher die Skidkufen direkt an das Werkstück montiert werden, ohne untereinander durch Traversen verbunden zu sein.

Wird zum Fördern von Fahrzeugkarosserien durch die Vorbehandlungsbäder und das Elektrotauchlackierbad einer Lackieranlage eine Skidfördertechnik eingesetzt, so wird jede Fahrzeugkarosserie beim Einlauf in den Vorbehandlungsbereich oder schon im Rohbau auf einen Tauchskidrahmen gesetzt und durchfährt dann auf diesem Skidrahmen die Vorbehandlungsbäder, das Elektrotauchlackierbad und auch den auf das Elektrotauchlackierbad folgenden Trockner. Danach erfolgt ein Wechsel der Fahrzeugkarosserie auf einen anderen Skidrahmen, auf dem die Fahrzeugkarosserie durch einen anschließenden Spritzlackierabschnitt der Lackieranlage gefördert wird.

Der Tauchskidrahmen, auf dem die Fahrzeugkarosserie durch das Elektrotauchlackierbad gefördert wird, ist normalerweise aus schwarzem Normalstahl gefertigt. Bei der Inbetriebnahme dieser Skidrahmen durchfahren dieselben die Vorbehandlungsbäder und das Elektrotauchlackierbad sowie den Tauchlack-Trockner. Dabei wird der Skidrahmen mit Tauchlack beschichtet. Im Tauchlack-Trockner wird diese Lackierung ausgehärtet und dient dann als Korrosionsschutz für den Skidrahmen.

Diese Lack-Schutzschicht bleibt auf dem Skidrahmen erhalten, bis auf die Beschichtung der Kontaktflächen an den Skidkufen und bis auf Stellen der Verriegelungsmechanismen zwischen dem Skidrahmen und der Fahrzeugkarosserie. Die Lack-Beschichtung der Skidkufen wird durch die zwischen dem Auslauf der Elektrotauchlackieranlage und dem Einlauf in den Trockner angeordnete Fördertechnik an den Stellen, wo es zu einer Berührung zwischen der Fördertechnik und dem Skidrahmen kommt, abgerieben. Die Verweilzeit in diesem Abschnitt beträgt ungefähr 15 Minuten, um dem Lack ausreichend Zeit zum Auslaufen aus Spalten der Fahrzeugkarosserie zu lassen.

Der in diesem Förderabschnitt von den Skidkufen abgeriebene, noch nicht ausgehärtete und klebrige Lack wird auf diese Weise in der gesamten das Elektrotauchlackierbad mit dem Trockner verbindenden Fördertechnik verteilt und muss in Betriebspausen der Lackieranlage, beispielsweise am Wochenende, manuell abgereinigt werden.

Diese Verschmutzung mit abgeriebenem Lack ist sogar noch in der Kühlzone des Trockners, nach erfolgter Lackaushärtung an der Fahrzeugkarosserie, anzutreffen. Während der Lack auf der Oberfläche der Fahrzeugkarosserie sich eine ausreichende Zeit lang auf der Aushärttemperatur befindet, ist die Unterseite der Skidkufen zum einen nicht der Strömung der Heißluft im Tauchlack-Trockner ausgesetzt und kann zum anderen, aufgrund der großen Masse der Skidkufen, nicht schnell genug aufgeheizt werden, so dass der Lack an der Unterseite der Skidkufen den Trockner unvernetzt verlässt.

Die DE 10 2004 011 254 A1 offenbart einen Werkstückträger gemäß dem Oberbegriff von Anspruch 1.

Der vorliegenden Erfindung liegt die Aufgabe zugrunde, einen Werkstückträger der eingangs genannten Art zu schaffen, bei welchem ein Abrieb von Tauchlack in der auf das Elektrotauchlackierbad folgenden Fördervorrichtung vermieden wird.

Diese Aufgabe wird durch einen Werkstückträger nach Anspruch 1 gelöst.

Durch die elektrische Isolierung der Kontaktfläche von der Kontaktiereinrichtung, mittels welcher der Beschichtungsstrom beim Hindurchfördern des Werkstücks durch das Elektrotauchlackierbad in das Werkstück eingeleitet wird, wird erreicht, dass kein Beschichtungsstrom zu der Kontaktfläche gelangt, so dass es an der Kontaktfläche, wo es später zu einem Reibkontakt zwischen dem Werkstückträger und der Fördertechnik kommt, keinen Aufbau von Tauchlack gibt, der von der Fördertechnik abgerieben werden kann.

Durch die erfindungsgemäße Lösung wird ein Abrieb von Tauchlack von dem Werkstückträger in der auf das Elektrotauchlackierbad folgenden Fördervorrichtung vermieden, und die aufwendige Reinigung von großen Bereichen der das Elektrotauchlackierbad mit dem Tauchlack-Trockner verbindenden Fördertechnik in Betriebspausen der Lackieranlage ist überflüssig.

Der erfindungsgemäße Werkstückträger umfasst einen Werkstückaufnahmebereich, an dem das Werkstück gehalten ist, und einen Fördervorrichtungs-Kontaktbereich, der mindestens eine Kontaktfläche aufweist, an welcher der Werkstückträger mit der auf das Elektrotauchlackierbad folgenden Fördervorrichtung in Kontakt kommt.

Grundsätzlich könnte vorgesehen sein, dass die Kontaktfläche des Fördervorrichtungs-Kontaktbereichs aus einem elektrisch nicht leitenden Material gebildet ist, so dass die Kontaktfläche bereits hierdurch von der elektrischen Kontaktiereinrichtung des Werkstückträgers elektrisch isoliert ist und daher im Elektrotauchlackierbad nicht beschichtet wird.

Alternativ oder ergänzend hierzu kann aber auch vorgesehen sein, dass der Werkstückaufnahmebereich und der Fördervorrichtungs-Kontaktbereich mit der Kontaktfläche voneinander elektrisch isoliert sind.

In diesem Fall kann der Fördervorrichtungs-Kontaktbereich mit der Kontaktfläche durchaus aus einem elektrisch leitenden Material gebildet sein, da eine Einleitung des Beschichtungsstroms in die Kontaktfläche durch die elektrische Isolierung zwischen dem Werkstückaufnahmebereich und dem Fördervorrichtungs-Kontaktbereich verhindert wird.

Insbesondere kann vorgesehen sein, dass der Fördervorrichtungs-Kontaktbereich ein metallisches Material umfasst, vorzugsweise ganz aus einem metallischen Material gebildet ist.

Da der Fördervorrichtungs-Kontaktbereich nicht mit einer Tauchlack-Schutzschicht überzogen wird, ist es von Vorteil, wenn der Fördervorrichtungs-Kontaktbereich ein in dem Elektrotauchlackierbad korrosionsbeständiges Material umfasst.

Ferner ist es günstig, wenn das Material des Fördervorrichtungs-Kontaktbereichs auch in dem Elektrotauchlackierbad vorgeschalteten Vorbehandlungsbädern korrosionsbeständig ist.

Besonders günstig ist es, wenn der Fördervorrichtungs-Kontaktbereich ein Edelstahlmaterial umfasst, vorzugsweise ganz aus einem Edelstahlmaterial gebildet ist.

Bei einer bevorzugten Ausgestaltung der Erfindung ist vorgesehen, dass der Werkstückträger als ein Skidrahmen ausgebildet ist und dass der Fördervorrichtungs-Kontaktbereich mindestens eine Auflagefläche einer Skidkufe umfasst.

Auch der Werkstückaufnahmebereich des Werkstückträgers kann ein metallisches Material umfassen, vorzugsweise ganz aus einem metallischen Material gebildet sein.

Von Vorteil ist es, wenn der Werkstückaufnahmebereich ein in dem Elektrotauchlackierbad beschichtbares Material umfasst, da in diesem Fall der Werkstückaufnahmebereich im Elektrotauchlackierbad mit einer Schutzschicht aus Tauchlack versehen wird und durch diese Schutzschicht gegen Korrosion in den Vorbehandlungsbädern und in dem Elektrotauchlackierbad geschützt ist.

Besonders günstig ist es, wenn der Werkstückaufnahmebereich ein Stahlmaterial umfasst.

Bei diesem Stahlmaterial kann es sich um einen Normalstahl handeln.

Um den Werkstückträger an einer Fördervorrichtung, beispielsweise einem Pendelförderer, einhängen zu können, ist es günstig, wenn der Werkstückaufnahmebereich mindestens eine glockenförmige Einhängeeinrichtung umfasst.

Um zu verhindern, dass eine Verformung des Fördervorrichtungs-Kontaktbereichs des Werkstückträgers einen negativen Einfluss auf den Werkstückaufnahmebereich hat, ist vorgesehen, dass der Werkstückaufnahmebereich mindestens zwei voneinander getrennte Werkstückaufnahmeabschnitte umfasst.

Diese voneinander getrennten Werkstückaufnahmeabschnitte sind über ein elektrisch leitfähiges Verbindungselement miteinander verbunden, so dass nur einer der Werkstückaufnahmeabschnitte mit einer elektrischen Kontaktiereinrichtung zum Einleiten des Beschichtungsstroms versehen sein muss.

Besonders günstig ist es, wenn das elektrisch leitfähige Verbindungselement längenvariabel ausgebildet ist, da auf diese Weise durch eine Längenänderung des elektrisch leitfähigen Verbindungselements zwischen den Werkstückaufnahmeabschnitten eine Stauchung der Werkstückaufnahmeabschnitte bei einer Verformung des Fördervorrichtungs-Kontaktbereichs vermieden wird.

Um die elektrische Isolierung der mindestens einen Kontaktfläche von der mindestens einen Kontaktiereinrichtung zu erzielen, kann vorgesehen sein, dass der Werkstückträger mindestens eine elektrische Isolierung umfasst, welche ein Keramikmaterial umfasst.

Alternativ oder ergänzend hierzu kann auch vorgesehen sein, dass der Werkstückträger mindestens eine elektrische Isolierung umfasst, welche ein elektrisch nicht leitendes Kunststoffmaterial umfasst.

Insbesondere kann vorgesehen sein, dass der Werkstückträger mindestens eine elektrische Isolierung umfasst, welche ein Polyphenylensulfid-Material umfasst.

Ein solches Material ist unter der Handelsbezeichnung "Ryton" bekannt.

Vorzugsweise umfasst der Werkstückträger mindestens eine elektrische Isolierung, die in dem Elektrotauchlackierbad und in einem auf das Elektrotauchlackierbad folgenden Trockner beständig ist.

Besonders günstig ist es, wenn die elektrische Isolierung auch in dem Elektrotauchlackierbad vorgeschalteten Vorbehandlungsbädern beständig ist.

Der erfindungsgemäße Werkstückträger eignet sich insbesondere zur Verwendung in einer Lackieranlage zum Lackieren von Werkstücken, insbesondere von Fahrzeugkarosserien, die mindestens ein Elektrotauchlackierbad, mindestens eine auf das Elektrotauchlackierbad folgende Fördervorrichtung und mindestens einen erfindungsgemäßen Werkstückträger umfasst.

Eine solche Lackieranlage kann ferner einen, vorzugsweise auf die Fördervorrichtung folgenden, Trockner umfassen.

Ferner kann eine solche Lackieranlage mindestens ein Vorbehandlungsbad umfassen.

Die auf das Elektrotauchlackierbad folgende Fördervorrichtung einer solchen Lackieranlage kann insbesondere als eine Rollenbahn ausgebildet sein.

Die vorliegende Erfindung betrifft ferner ein Verfahren zum Lackieren eines Werkstücks, insbesondere einer Fahrzeugkarosserie, das die folgenden Verfahrensschritte umfasst:
- Befestigen des Werkstücks an einem Werkstückträger;
- Fördern des an dem Werkstückträger gehaltenen Werkstücks durch mindestens ein Elektrotauchlackierbad, wobei ein Beschichtungsstrom über mindestens eine elektrische Kontaktiereinrichtung des Werkstückträgers in das Werkstück eingeleitet wird;
- darauffolgendes Fördern des an dem Werkstückträger gehaltenen Werkstücks mittels einer Fördervorrichtung, mit welcher der Werkstückträger an mindestens einer Kontaktfläche in Kontakt kommt.

Der vorliegenden Erfindung liegt die weitere Aufgabe zugrunde, ein Verfahren der vorstehend genannten Art zu schaffen, bei dem ein Abrieb von Tauchlack von dem Werkstückträger in der auf das Elektrotauchlackierbad folgenden Fördervorrichtung vermieden wird.

Diese Aufgabe wird durch ein Verfahren nach Anspruch 20 gelöst.

Besondere Ausgestaltungen des erfindungsgemäßen Verfahrens sind Gegenstand der Ansprüche 21 bis 37, deren Vorteile bereits vorstehend im Zusammenhang mit besonderen Ausgestaltungen des erfindungsgemäßen Werkstückträgers erläutert worden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung eines Skidrahmens mit einem Fördervorrichtungs-Kontaktbereich und einem in zwei separate Abschnitte unterteilten Werkstückaufnahmebereich;
- Fig. 2: einen schematischen vertikalen Schnitt durch eine elektrische Iso- lierung des Skidrahmens aus Fig. 1;
- Fig. 3: eine schematische Seitenansicht eines Elektrotauchlackierbads und eines Pendelförderers, welcher an Skidrahmen gehaltene Fahrzeugkarosserien durch das Elektrotauchlackierbad hindurch- fördert; und
- Fig. 4: eine schematische Seitenansicht eines Abschnitts einer auf das Elektrotauchlackierbad aus Fig. 3 folgenden Rollenbahn, an wel- cher sich der Skidrahmen mit seinen Skidkufen abstützt.

Gleiche oder funktional äquivalente Elemente sind in allen Figuren mit denselben Bezugszeichen bezeichnet.

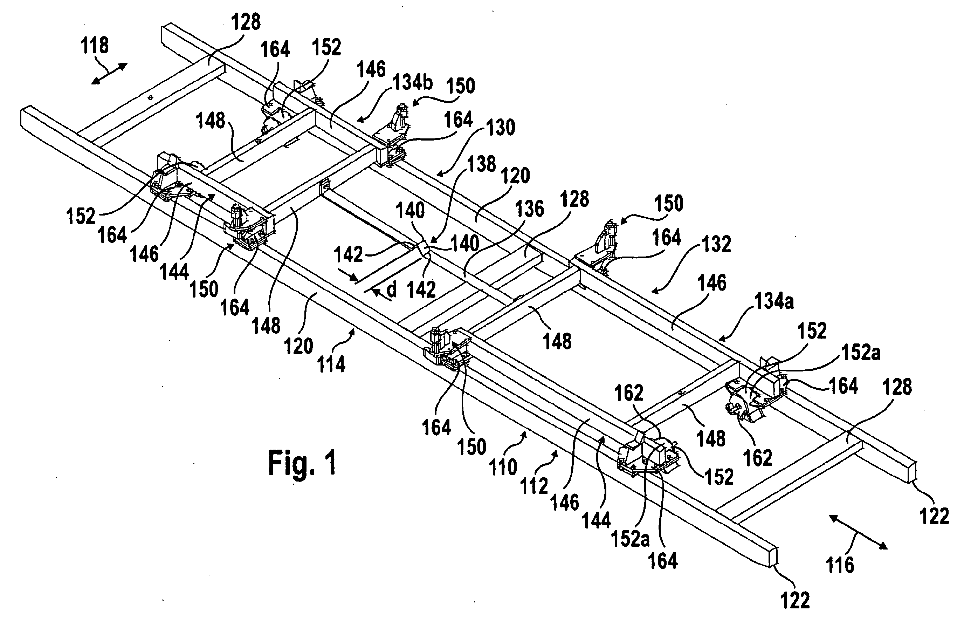

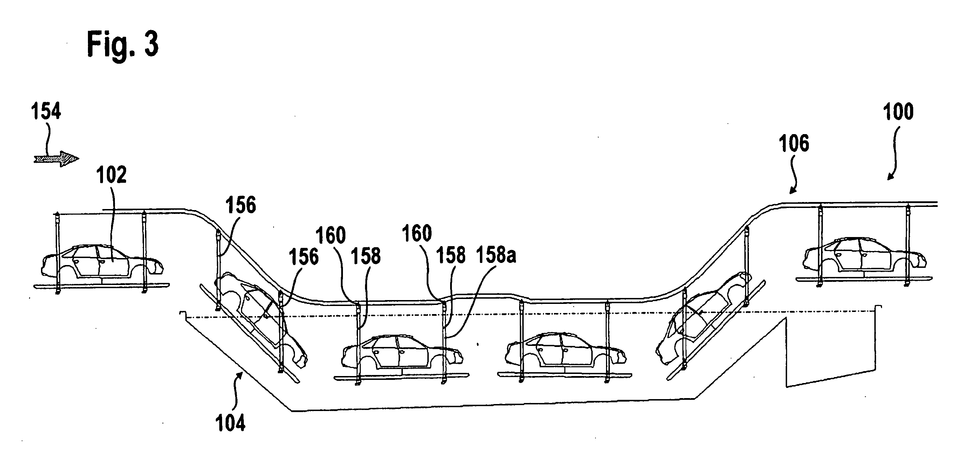

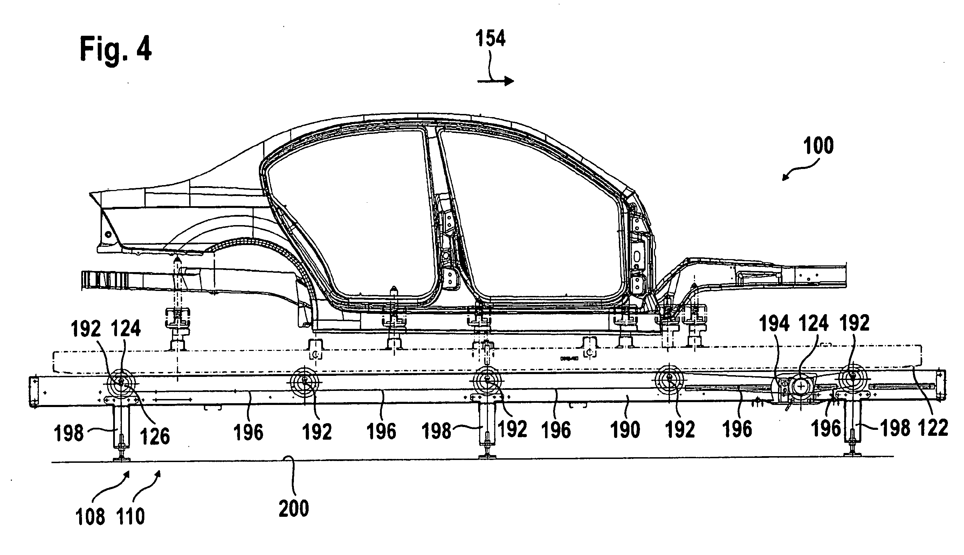

Eine in den Fig. 1 bis 4 abschnittsweise dargestellte, als Ganzes mit 100 bezeichnete Lackieranlage zum Lackieren von Fahrzeugkarosserien 102 umfasst ein in Fig. 3 schematisch dargestelltes Elektrotauchlackierbad 104, einen Pendelförderer 106 zum Fördern der Fahrzeugkarosserien 102 in das Elektrotauchlackierbad 104 hinein, durch das Elektrotauchlackierbad 104 hindurch und aus dem Elektrotauchlackierbad 104 wieder heraus, eine in Fig. 4 abschnittsweise dargestellte, als Rollenbahn 108 ausgebildete Fördervorrichtung 110, welche den Auslauf des Elektrotauchlackierbads 104 mit einem Einlauf eines (nicht dargestellten) Trockners zum Trocknen der lackierten Fahrzeugkarosserien 102 verbindet, den (nicht dargestellten) Trockner zum Trocknen der lackierten Fahrzeugkarosserien 102 sowie mehrere, in der Durchlaufrichtung der Fahrzeugkarosserien 102 vor dem Elektrotauchlackierbad 104 angeordnete (nicht dargestellte) Vorbehandlungsbäder, insbesondere ein Entfettungsbad und ein Phosphatierungsbad.

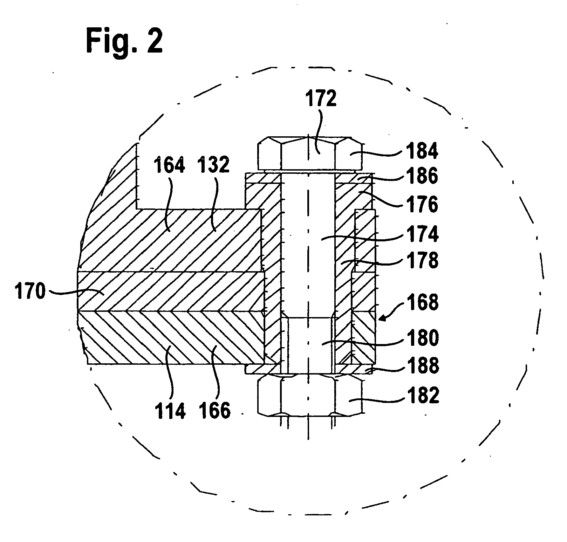

Zum Hindurchfördern der Fahrzeugkarosserien 102 durch die Lackieranlage 100 hindurch wird jede Fahrzeugkarosserie 102 auf jeweils einen, in den Fig. 1 und 2 im Detail dargestellten Werkstückträger 110 in Form eines Skidrahmens 112 aufgesetzt.

Jeder dieser Skidrahmen 112 umfasst einen Fördervorrichtungs-Kontaktbereich 114, welcher seinerseits zwei parallel zur Längsrichtung 116 des Skidrahmens 112 ausgerichtete und in der Querrichtung 118 des Skidrahmens 112 voneinander beabstandete Skidkufen 120 umfasst, deren Unterseiten Kontaktflächen 122 bilden, mit welchen der Skidrahmen 112 an den oberen Kuppen 124 der Rollen 126 der Rollenbahn 108 aufliegt, so dass der Skidrahmen 112 an diesen Kontaktflächen 122 mit der Rollenbahn 108 in Kontakt kommt.

Die beiden Skidkufen 120 sind mittels mehrerer, beispielsweise drei, in der Querrichtung 118 des Skidrahmens 112 verlaufender und in der Längsrichtung 116 des Skidrahmens 112 voneinander beabstandeter Traversen 128 miteinander verbunden, so dass die Skidkufen 120 und die Traversen 128 einen zusammenhängenden Rahmen 130 bilden.

Ferner umfasst jeder Skidrahmen 112 einen Werkstückaufnahmebereich 132, welcher seinerseits mehrere, beispielsweise zwei, Werkstückaufnahmeabschnitte 134a und 134b umfasst, welche in der Längsrichtung 116 des Skidrahmens 112 voneinander beabstandet sind und über ein elektrisch leitfähiges Verbindungselement 136 miteinander verbunden sind.

Das Verbindungselement 136 ist so ausgebildet, dass seine Länge längs der Längsrichtung 116 des Skidrahmens 112 innerhalb gewisser Grenzen variabel ist und sich an einen variierenden Abstand zwischen dem vorderen Werkstückaufnahmeabschnitt 134a und dem hinteren Werkstückaufnahmeabschnitt 134b anpassen kann.

Diese Längenvariabilität kann beispielsweise dadurch erreicht werden, dass das Verbindungselement 136 eine winkelförmige Auffaltung 138 umfasst, deren beide Schenkel 140 sich bei einer Zug- oder Druckbeanspruchung des Verbindungselements 136 gegeneinander verkippen können, so dass der Abstand d der einander abgewandten Basislinien 142 der Schenkel 140 bei einer Zugbeanspruchung des Verbindungselements 136 vergrößerbar und bei einer Druckbeanspruchung des Verbindungselements 136 verkleinerbar ist.

Jeder der Werkstückaufnahmeabschnitte 134 umfasst jeweils einen Aufnahmerahmen 144, der aus parallel zur Längsrichtung 116 des Skidrahmens 112 verlaufenden Längsträgern 146 und aus parallel zur Querrichtung 118 des Skidrahmens 112 verlaufenden, jeweils zwei Längsträger 146 miteinander verbindenden Querträgern 148 zusammengesetzt ist.

An jedem der Längsträger 146 der Werkstückaufnahmeabschnitte 134 ist jeweils mindestens eine Karossenaufnahme 150 angeordnet, welche zum Arretieren der Fahrzeugkarosserie 102 an dem Werkstückaufnahmebereich 132 und zur Herstellung eines elektrischen Kontakts zwischen der Fahrzeugkarosserie 102 und dem Werkstückaufnahmebereich 132 des Skidrahmens 112 dienen.

Dabei können an dem Werkstückaufnahmebereich 132 grundsätzlich beliebig viele Karosserieaufnahmen 150 an beliebigen Positionen vorgesehen sein, um insbesondere an ein und demselben Skidrahmen 112 Fahrzeugkarosserien 102 mit unterschiedlichen Abmessungen haltern zu können.

Um den Skidrahmen 112 für den Transport der Fahrzeugkarosserie 102 durch die Vorbehandlungsbäder und das Elektrotauchlackierbad 104 an dem Pendelförderer 106 einhängen zu können, sind die Werkstückaufnahmeabschnitte 134a, 134b an ihren Längsträgern 146 mit jeweils einer glockenförmigen Einhängeeinrichtung 152 versehen, wie sie beispielsweise in der DE 198 39 725 C1 beschrieben ist, auf welche in Bezug auf den Aufbau dieser glockenförmigen Einhängeeinrichtung 152 hiermit ausdrücklich Bezug genommen wird.

Wie aus Fig. 3 zu ersehen ist, umfasst der Pendelförderer 106 für jeden Skidrahmen 112 jeweils zwei in der Förderrichtung 154 voneinander beabstandete Fördergehänge 156 in Form von Pendeln 158, die jeweils um obere, horizontal und quer zur Förderrichtung 154 verlaufende Schwenkachsen 160 schwenkbar mit einer umlaufenden Förderkette des Pendelförderers 106 verbunden sind.

Jeder Skidrahmen 112 ist dabei mit seinen Einhängeeinrichtungen 152 an den unteren Enden zweier Pendel 158 eingehängt.

Die in der Förderrichtung 154 vorne liegenden Einhängeeinrichtungen 152a dienen dabei zugleich als glockenförmige elektrische Kontaktiereinrichtungen 162, welche mit pendelseitigen elektrischen Kontaktiereinrichtungen an den jeweils in der Förderrichtung 154 vorne liegenden Pendeln 158a in elektrisch leitendem Kontakt stehen und dadurch die Einleitung eines Beschichtungsstroms in den vorderen Werkstückaufnahmeabschnitt 134a und von dort über das elektrisch leitfähige Verbindungselement 136 auch in den hinteren Werkstückaufnahmeabschnitt 134b ermöglichen. Von den beiden Werkstückaufnahmeabschnitten 134a, 134b wird der Beschichtungsstrom über die Karosserieaufnahmen 150 in die jeweils an dem Skidrahmen 112 angeordnete Fahrzeugkarosserie 102 eingeleitet.

Der Werkstückaufnahmebereich 132 des Skidrahmens 112 ist mittels von den Längsträgern 146 der Werkstückaufnahmeabschnitte 134a, 134b abstehender, jeweils an den vier Ecken jedes Werkstückaufnahmeabschnitts 134a, 134b angeordneter Konsolen 164 an von den Skidkufen 120 des Fördervorrichtungs-Kontaktbereichs 114 des Skidrahmens 112 abstehenden Konsolen 166 gehalten, wobei zwischen den Konsolen 166 des Fördervorrichtungs-Kontaktbereichs 114 und den Konsolen 164 des Werkstückaufnahmebereichs 132 jeweils eine elektrische Isolierung 168 angeordnet ist, welche eine zwischen die Konsolen 164 und 166 eingebrachte Isolierplatte 170 umfasst (siehe Fig. 2).

Die Konsolen 164, 166 und die Isolierplatten 170 werden mittels Befestigungsschrauben 172 aneinander festgelegt, deren Schäfte 174 jeweils eine mit einem Bund 176 versehene Hülse 178 aus einem elektrisch isolierenden Material durchsetzen und an ihrem unteren Ende mittels jeweils einer auf ein Gewinde 180 aufgedrehten Mutter 182 gesichert sind.

Das elektrisch nicht leitende Material der Isolierplatten 170 und der Hülsen 178 kann beispielsweise ein Keramikmaterial oder ein elektrisch nicht leitendes Kunststoffmaterial, beispielsweise Polyphenylensulfid (PPS; Handelsname "Ryton") sein.

Das elektrisch isolierende Material der Isolierplatten 170 und der Hülsen 178 muss sowohl in den unterschiedlichen Bedingungen der Vorbehandlungsbäder und des Elektrotauchlackierbads als auch im nach der Tauchlackierung durchlaufenen Trockner (bei Temperaturen von maximal etwa 200°C) beständig sein.

Wie aus Fig. 2 zu ersehen ist, ist zwischen dem Schraubenkopf 184 und dem Bund 176 jeder Hülse 178 jeweils eine Unterlegscheibe 186 angeordnet.

Ferner ist zwischen jeder Mutter 182 und dem unteren Ende der Hülse 178 bzw. der Unterseite der Konsole 166 ebenfalls jeweils eine Unterlegscheibe 188 angeordnet.

Die Unterlegscheiben 186 und 188 können aus einem elektrisch leitfähigen Material, insbesondere aus einem Stahlmaterial, gebildet sein, da die erforderliche elektrische Isolierung zwischen dem Werkstückaufnahmebereich 132 einerseits und dem Fördervorrichtungs-Kontaktbereich 114 andererseits im Bereich jeder Befestigungsschraube 172 bereits durch die Hülse 178 mit Bund 176 aus elektrisch isolierendem Material gewährleistet ist.

Der Fördervorrichtungs-Kontaktbereich 114 des Skidrahmens 112 ist vorzugsweise aus einem metallischen Material gebildet, das sowohl in den Vorbehandlungsbädern als auch in dem Elektrotauchlackierbad 104 chemisch beständig ist und nicht korrodiert.

Die chemischen Milieus dieser Bäder sind insbesondere die folgenden:
- Vorbehandlungs-Entfettungsbad mit einer Temperatur von bis zu 60°C und einem pH-Wert von ungefähr 11;
- Vorbehandlungs-Phosphatierungsbad mit einer Temperatur von bis zu 60°C und einem pH-Wert von ungefähr 2,6;
- Elektrotauchlackierbad mit einer Temperatur von bis zu 32°C und einem pH-Wert von ungefähr 6,8.

Ein geeignetes metallisches Material, welches in den vorstehend genannten chemischen Milieus beständig ist und nicht korrodiert, ist insbesondere ein Edelstahlmaterial.

Ein solches Edelstahlmaterial kann insbesondere mindestens ungefähr 10 Gewichtsprozent Chrom enthalten.

Ein geeignetes Edelstahlmaterial ist beispielsweise der Edelstahl mit der Werkstoffnummer 1.4301 nach der EN 10088-3. Die Zusammensetzung dieses Edelstahlmaterials ist beispielsweise wie folgt: 17,0 bis 19,5 Gewichtsprozent Cr; 8,0 bis 10,5 Gewichtsprozent Ni; maximal 0,07 Gewichtsprozent C; Rest Eisen.

Der Werkstückaufnahmebereich 132 des Skidrahmens 112 ist im Elektrotauchlackierbad 104 stromführend, so dass es an den Oberflächen des Werkstückaufnahmebereichs 132 zu einer Lackabscheidung kommt, die nach dem Einbrennen im Trockner das darunterliegende Material gegen Korrosion schützt.

Der Werkstückaufnahmebereich 132 muss daher nicht aus einem Edelstahlmaterial gefertigt werden, sondern kann aus einem Normalstahl gebildet sein.

Ein solcher Normalstahl kann insbesondere ein unlegierter oder niedrig legierter Stahl sein.

Als Normalstahl für den Werkstückaufnahmebereich 132 kann insbesondere der Stahl mit der Werkstoffnummer 1.0037 gemäß der Norm EN 10025 verwendet werden, der auch unter den Bezeichnungen "St 37-2" gemäß der Norm DIN 17 100 oder "S235JR" gemäß der Norm DIN EN 10 025 bekannt ist. Dieses Stahlmaterial weist beispielsweise die folgende Zusammensetzung auf: maximal 1,4 Gewichtsprozent Mn; maximal 0,20 Gewichtsprozent C; maximal 0,30 Gewichtsprozent Si; maximal 0,050 Gewichtsprozent P; maximal 0,050 Gewichtsprozent S; maximal 0,009 Gewichtsprozent N; Rest Eisen.

Die auf das Elektrotauchlackierbad 104 folgende Rollenbahn 108, welche die Fahrzeugkarosserien 102 zum (nicht dargestellten) Trockner fördert, umfasst in einem rahmenförmigen Gestell 190 um horizontale Drehachsen 192 drehbar gelagerte Rollen 126, auf deren oberen Kuppen 124 jeder Skidrahmen 112 mit seinen Kontaktflächen 122 aufliegt.

Die Rollen 126 sind mittels eines Antriebsmotors 194 und eines Riemengetriebes, welches Zahnriemen 196 umfasst, zu einer Drehbewegung um ihre Drehachsen 192 antreibbar, wodurch der jeweils auf der Rollenbahn 108 angeordnete Skidrahmen 112 längs der Förderrichtung 154 gefördert wird.

Das Gestell 190, in dem die Rollen 126 drehbar gelagert sind, stützt sich über Stützfüße 198 an einem Untergrund 200 ab.

Die vorstehend beschriebene Lackieranlage 100 zum Elektrotauchlackieren von Fahrzeugkarosserien 102 funktioniert wie folgt:

An einer in der Förderrichtung 154 vor dem ersten Vorbehandlungsbad liegenden (nicht dargestellten) Aufgabestation wird jede Fahrzeugkarosserie 102 auf den Werkstückaufnahmebereich 132 eines Skidrahmens 112 aufgesetzt und an demselben arretiert.

Der Skidrahmen 112 mit der daran arretierten Fahrzeugkarosserie 102 wird an jeweils zwei Pendeln 158 des Pendelförderers 106 aufgehängt.

Anschließend wird der Skidrahmen 112 mit der daran arretierten Fahrzeugkarosserie 102 zunächst durch die Vorbehandlungsbäder und anschließend durch das in Fig. 3 dargestellte Elektrotauchlackierbad 104 hindurchgefördert, wobei die Fahrzeugkarosserie 102 und der Skidrahmen 112 jeweils vollständig in die Vorbehandlungsbäder und in das Elektrotauchlackierbad 104 eingetaucht werden.

Über das jeweils in der Förderrichtung 154 vorne liegende Pendel 158a, die elektrischen Kontaktiereinrichtungen 162 am vorderen Werkstückaufnahmeabschnitt 134a, das elektrisch leitfähige Verbindungselement 136 und den hinteren Werkstückaufnahmeabschnitt 134b sowie die Karosserieaufnahme 150 wird die Fahrzeugkarosserie 102 elektrisch kontaktiert und beim Passieren des Elektrotauchlackierbads 104 auf die gewünschte Beschichtungsspannung gebracht.

Wird in dem Elektrotauchlackierbad 104 eine kataphoretische Tauchlackierung (KTL) durchgeführt, so wird jede Fahrzeugkarosserie 102 auf ein negatives Potential gelegt, während in dem Elektrotauchlackierbad 104 längs des Förderweges der Fahrzeugkarosserien 102 angeordnete (nicht dargestellte) Elektroden auf ein demgegenüber positives Potential gelegt werden.

Da der Beschichtungsstrom über die elektrischen Kontaktiereinrichtungen 162 in den Werkstückaufnahmebereich 132 des Skidrahmens 112 eingeleitet wird, ist der Werkstückaufnahmebereich 132 ebenso stromführend wie die Fahrzeugkarosserie 102, so dass die Oberflächen des Werkstückaufnahmebereichs 132 mit einer schützenden Lackschicht beschichtet werden.

Da die Beschichtung des Werkstückaufnahmebereichs 132 nicht durch Kontakt mit einer Fördervorrichtung wieder abgerieben wird, nimmt die Schichtdicke an den Oberflächen des Werkstückaufnahmebereichs 132 zu, bis diese Beschichtung des Werkstückaufnahmebereichs 132 ab einer bestimmten Schichtdicke wegen des damit verbundenen zu großen elektrischen Widerstandes abgeschlossen ist.

In den durch die elektrischen Isolierungen 168 von dem Werkstückaufnahmebereich 132 und damit von der elektrischen Kontaktiereinrichtung 162 elektrisch isolierten Fördervorrichtungs-Kontaktbereich 114 des Skidrahmens 112 wird hingegen kein Beschichtungsstrom eingeleitet, so dass es an den Oberflächen des Fördervorrichtungs-Kontaktbereichs 114 des Skidrahmens 112 zu keiner Beschichtung im Elektrotauchlackierbad 104 kommt.

Nach dem Herausheben der an dem Skidrahmen 112 angeordneten Fahrzeugkarosserie 102 aus dem Elektrotauchlackierbad 104 wird der Skidrahmen 112 von den Pendeln 158 des Pendelförderers 106 abgenommen und auf die in Fig. 4 abschnittsweise dargestellte Rollenbahn 108 aufgesetzt, welche den Skidrahmen 112 mit der daran arretierten Fahrzeugkarosserie 102 zum Tauchlack-Trockner fördert.

Nur die Kontaktflächen 122 an den Unterseiten der Skidkufen 120 kommen dabei in Kontakt mit den Rollen 126 der Rollenbahn 108. Da diese zum Fördervorrichtungs-Kontaktbereich 114 zählenden Kontaktflächen 122 jedoch im Elektrotauchlackierbad 104 nicht beschichtet worden sind, ist an diesen Kontaktflächen 122 auch keine Beschichtung vorhanden, welche durch Kontakt mit der Rollenbahn 108 abgerieben und dadurch in der Rollenbahn 108 oder dem darauffolgenden Trockner verteilt werden könnte.

Der mit Tauchlack beschichtete Werkstückaufnahmebereich 132 des Skidrahmens 112 kommt beim Transport über die Rollenbahn 108 nicht in Kontakt mit der Rollenbahn 108, so dass die an dem Werkstückaufnahmebereich 132 vorhandene Lackbeschichtung nicht abgerieben werden kann.

Auf diese Weise wird wirksam vermieden, dass es an den Stellen des Skidrahmens 112, wo es zu einem Reibungskontakt zwischen dem Skidrahmen 112 und der Fördertechnik kommt, einen Lackaufbau gibt, der von der Fördertechnik abgerieben werden könnte.

Durch die Zweiteilung des Werkstückaufnahmebereichs 132 in mehrere Abschnitte, insbesondere in einen vorderen Werkstückaufnahmeabschnitt 134a und einen hinteren Werkstückaufnahmeabschnitt 134b, wird erreicht, dass eine Verformung des Rahmens 130 des Fördervorrichtungs-Kontaktbereichs 114 des Skidrahmens 112 keinen negativen Einfluss auf die Aufnahmerahmen 144 der Werkstückaufnahmeabschnitte 134a, 134b hat.

Insbesondere kommt es zu keiner Stauchung der Aufnahmerahmen 144 der Werkstückaufnahmeabschnitte 134a, 134b, da durch eine Längenänderung des elektrisch leitfähigen Verbindungselements 136 zwischen den Werkstückaufnahmeabschnitten 134a, 134b eine Stauchung der Werkstückaufnahmeabschnitte 134a und 134b verhindert wird.

## Patentansprüche

1. Werkstückträger zum Fördern eines zu lackierenden Werkstücks, insbesondere einer Fahrzeugkarosserie (102), durch mindestens ein Elektrotauchlackierbad (104) und mittels mindestens einer auf das Elektrotauchlackierbad (104) folgenden Fördervorrichtung,
umfassend mindestens eine elektrische Kontaktiereinrichtung (162) zum Einleiten eines Beschichtungsstroms in das Werkstück beim Hindurchfördern des Werkstücks durch das Elektrotauchlackierbad (104) und mindestens eine Kontaktfläche (122), an welcher der Werkstückträger (110) mit der auf das Elektrotauchlackierbad (104) folgenden Fördervorrichtung in Kontakt kommt,
wobei mindestens eine Kontaktfläche (122) von der mindestens einen Kontaktiereinrichtung (162) elektrisch isoliert ist und
wobei der Werkstückträger (110) einen Werkstückaufnahmebereich (132), an dem das Werkstück gehalten ist, und einen Fördervorrichtungs-Kontaktbereich (114), der mindestens eine Kontaktfläche (122) aufweist, an welcher der Werkstückträger (110) mit der auf das Elektrotauchlackierbad (104) folgenden Fördervorrichtung in Kontakt kommt, umfasst,
**dadurch gekennzeichnet,**
**dass** der Werkstückaufnahmebereich (132) mindestens zwei voneinander getrennte Werkstückaufnahmeabschnitte (134a, 134b) umfasst, die über ein elektrisch leitfähiges Verbindungselement (136) miteinander verbunden und in der Längsrichtung (116) des Werkstückträgers (110) voneinander beabstandet sind.

2. Werkstückträger nach Anspruch 1, **dadurch gekennzeichnet, dass** der Werkstückaufnahmebereich (132) und der Fördervorrichtungs-Kontaktbereich (114) voneinander elektrisch isoliert sind.

3. Werkstückträger nach einem der Ansprüche 1 oder 2, **dadurch gekennzeichnet, dass** der Fördervorrichtungs-Kontaktbereich (114) ein metallisches Material umfasst.

4. Werkstückträger nach einem der Ansprüche 1 bis 3, **dadurch gekennzeichnet, dass** der Fördervorrichtungs-Kontaktbereich (114) ein in dem Elektrotauchlackierbad (104) korrosionsbeständiges Material umfasst.

5. Werkstückträger nach einem der Ansprüche 3 oder 4, **dadurch gekennzeichnet, dass** der Fördervorrichtungs-Kontaktbereich (114) ein Edelstahlmaterial umfasst.

6. Werkstückträger nach einem der Ansprüche 1 bis 5, **dadurch gekennzeichnet, dass** der Werkstückträger (110) als ein Skidrahmen (112) ausgebildet ist und dass der Fördervorrichtungs-Kontaktbereich (114) mindestens eine Auflagefläche einer Skidkufe (120) umfasst.

7. Werkstückträger nach einem der Ansprüche 1 bis 6, **dadurch gekennzeichnet, dass** der Werkstückaufnahmebereich (132) ein metallisches Material umfasst.

8. Werkstückträger nach einem der Ansprüche 1 bis 7, **dadurch gekennzeichnet, dass** der Werkstückaufnahmebereich (132) ein in dem Elektrotauchlackierbad (104) beschichtbares Material umfasst.

9. Werkstückträger nach einem der Ansprüche 1 bis 8, **dadurch gekennzeichnet, dass** der Werkstückaufnahmebereich (132) ein Stahlmaterial umfasst.

10. Werkstückträger nach einem der Ansprüche 1 bis 9, **dadurch gekennzeichnet, dass** der Werkstückaufnahmebereich (132) mindestens eine glockenförmige Einhängeeinrichtung (152) umfasst.

11. Werkstückträger nach einem der Ansprüche 1 bis 10, **dadurch gekennzeichnet, dass** das elektrisch leitfähige Verbindungselement (136) längenvariabel ausgebildet ist.

12. Werkstückträger nach einem der Ansprüche 1 bis 11, **dadurch gekennzeichnet, dass** der Werkstückträger (110) mindestens eine elektrische Isolierung (168) umfasst, welche ein Keramikmaterial umfasst.

13. Werkstückträger nach einem der Ansprüche 1 bis 12, **dadurch gekennzeichnet, dass** der Werkstückträger (110) mindestens eine elektrische Isolierung (168) umfasst, welche ein elektrisch nicht leitendes Kunststoffmaterial umfasst.

14. Werkstückträger nach Anspruch 13, **dadurch gekennzeichnet, dass** der Werkstückträger (110) mindestens eine elektrische Isolierung (168) umfasst, welche ein Polyphenylensulfid-Material umfasst.

15. Werkstückträger nach einem der Ansprüche 1 bis 14, **dadurch gekennzeichnet, dass** der Werkstückträger (110) mindestens eine elektrische Isolierung (168) umfasst, die in dem Elektrotauchlackierbad (104) und in einem auf das Elektrotauchlackierbad (104) folgenden Trockner beständig ist.

16. Lackieranlage zum Lackieren von Werkstücken, insbesondere von Fahrzeugkarosserien (102), umfassend mindestens ein Elektrotauchlackierbad (104), mindestens eine auf das Elektrotauchlackierbad (104) folgende Fördervorrichtung und mindestens einen Werkstückträger nach einem der Ansprüche 1 bis 15.

17. Lackieranlage nach Anspruch 16, **dadurch gekennzeichnet, dass** die Lackieranlage (100) ferner einen Trockner umfasst.

18. Lackieranlage nach einem der Ansprüche 16 oder 17, **dadurch gekennzeichnet, dass** die Lackieranlage (100) mindestens ein Vorbehandlungsbad umfasst.

19. Lackieranlage nach einem der Ansprüche 16 bis 18, **dadurch gekennzeichnet, dass** die auf das Elektrotauchlackierbad (104) folgende Fördervorrichtung als eine Rollenbahn (108) ausgebildet ist.

20. Verfahren zum Lackieren eines Werkstücks, insbesondere einer Fahrzeugkarosserie (102), umfassend die folgenden Verfahrensschritte:
- Befestigen des Werkstücks an einem Werkstückträger (110);
- Fördern des an dem Werkstückträger (110) gehaltenen Werkstücks durch mindestens ein Elektrotauchlackierbad (104), wobei ein Beschichtungsstrom über mindestens eine elektrische Kontaktiereinrichtung (162) des Werkstückträgers (110) in das Werkstück eingeleitet wird;
- darauffolgendes Fördern des an dem Werkstückträger (110) gehaltenen Werkstücks mittels einer Fördervorrichtung, mit welcher der Werkstückträger (110) an mindestens einer Kontaktfläche (122) in Kontakt kommt;
wobei ein Werkstückträger (110) verwendet wird, bei dem mindestens eine Kontaktfläche (122) von der mindestens einen Kontaktiereinrichtung (162) elektrisch isoliert ist und der einen Werkstückaufnahmebereich (132), an dem das Werkstück gehalten ist, und einen Fördervorrichtungs-Kontaktbereich (114), der mindestens eine Kontaktfläche (122) aufweist, an welcher der Werkstückträger (110) mit der auf das Elektrotauchlackierbad (104) folgenden Fördervorrichtung in Kontakt kommt, umfasst,
**dadurch gekennzeichnet, dass**
ein Werkstückaufnahmebereich (132) verwendet wird, der mindestens zwei voneinander getrennte Werkstückaufnahmeabschnitte (134a, 134b) umfasst, die über ein elektrisch leitfähiges Verbindungselement (136) miteinander verbunden und in der Längsrichtung (116) des Werkstückträgers (110) voneinander beabstandet sind.

21. Verfahren nach Anspruch 20, **dadurch gekennzeichnet, dass** der Werkstückaufnahmebereich (132) und der Fördervorrichtungs-Kontaktbereich (114) voneinander elektrisch isoliert sind.

22. Verfahren nach einem der Ansprüche 20 oder 21, **dadurch gekennzeichnet, dass** der Fördervorrichtungs-Kontaktbereich (114) ein metallisches Material umfasst.

23. Verfahren nach einem der Ansprüche 20 bis 22, **dadurch gekennzeichnet, dass** der Fördervorrichtungs-Kontaktbereich (114) ein in dem Elektrotauchlackierbad (104) korrosionsbeständiges Material umfasst.

24. Verfahren nach einem der Ansprüche 22 oder 23, **dadurch gekennzeichnet, dass** der Fördervorrichtungs-Kontaktbereich (114) ein Edelstahlmaterial umfasst.

25. Verfahren nach einem der Ansprüche 20 bis 24, **dadurch gekennzeichnet, dass** ein als ein Skidrahmen (112) ausgebildeter Werkstückträger (110) verwendet wird und dass der Fördervorrichtungs-Kontaktbereich (114) mindestens eine Auflagefläche einer Skidkufe (120) umfasst.

26. Verfahren nach einem der Ansprüche 20 bis 25, **dadurch gekennzeichnet, dass** der Werkstückaufnahmebereich (132) ein metallisches Material umfasst.

27. Verfahren nach einem der Ansprüche 20 bis 26, **dadurch gekennzeichnet, dass** der Werkstückaufnahmebereich (132) in dem Elektrotauchlackierbad (104) zumindest teilweise beschichtet wird.

28. Verfahren nach einem der Ansprüche 20 bis 27, **dadurch gekennzeichnet, dass** der Werkstückaufnahmebereich (132) ein Stahlmaterial umfasst.

29. Verfahren nach einem der Ansprüche 20 bis 28, **dadurch gekennzeichnet, dass** der Werkstückaufnahmebereich (132) mindestens eine glockenförmige Einhängeeinrichtung (152) umfasst.

30. Verfahren nach einem der Ansprüche 20 bis 29, **dadurch gekennzeichnet, dass** ein längenvariables elektrisch leitfähiges Verbindungselement (136) verwendet wird.

31. Verfahren nach einem der Ansprüche 20 bis 30, **dadurch gekennzeichnet, dass** der Werkstückträger (110) mindestens eine elektrische Isolierung (168) umfasst, welche ein Keramikmaterial umfasst.

32. Verfahren nach einem der Ansprüche 20 bis 31, **dadurch gekennzeichnet, dass** der Werkstückträger (110) mindestens eine elektrische Isolierung (168) umfasst, welche ein elektrisch nicht leitendes Kunststoffmaterial umfasst.

33. Verfahren nach Anspruch 32, **dadurch gekennzeichnet, dass** der Werkstückträger (110) mindestens eine elektrische Isolierung (168) umfasst, welche ein Polyphenylensulfid-Material umfasst.

34. Verfahren nach einem der Ansprüche 20 bis 33, **dadurch gekennzeichnet, dass** der Werkstückträger (110) mindestens eine elektrische Isolierung (168) umfasst, die in dem Elektrotauchlackierbad (104) und in einem auf das Elektrotauchlackierbad (104) folgenden Trockner beständig ist.

35. Verfahren nach einem der Ansprüche 20 bis 34, **dadurch gekennzeichnet, dass** die an dem Werkstückträger (110) gehaltenen Werkstücke mittels der Fördervorrichtung, mit welcher der Werkstückträger (110) an mindestens einer Kontaktfläche (122) in Kontakt kommt, zu einem auf das Elektrotauchlackierbad (104) folgenden Trockner gefördert wird.

36. Verfahren nach einem der Ansprüche 20 bis 35, **dadurch gekennzeichnet, dass** das an dem Werkstückträger (110) gehaltene Werkstück vor dem Passieren des Elektrotauchlackierbads (104) durch mindestens ein Vorbehandlungsbad gefördert wird.

37. Verfahren nach einem der Ansprüche 20 bis 36, **dadurch gekennzeichnet, dass** das an dem Werkstückträger (110) gehaltene Werkstück nach Passieren des Elektrotauchlackierbads (104) mittels einer Rollenbahn (108) gefördert wird.

## Claims

1. Workpiece carrier for conveying a workpiece to be painted, in particular a vehicle body (102), through at least one electrophoretic dip paint bath (104) and by means of at least one conveyor device following the electrophoretic dip paint bath (104),
comprising at least one electrical contacting device (162) for passing a coating current into the workpiece when the workpiece is conveyed through the electrophoretic dip paint bath (104) and at least one contact surface (122), the workpiece carrier (110) coming into contact with the conveyor device following the electrophoretic dip paint bath (104) at said surface,
wherein at least one contact surface (122) is electrically insulated from the at least one contacting device (162) and
wherein the workpiece carrier (110) comprises a workpiece receiving area (132), the workpiece being held at said area, and a conveyor device contact area (114) having at least one contact surface (122), the workpiece carrier (110) coming into contact with the conveyor device following the electrophoretic dip paint bath (104) at said surface,
**characterized in that** the workpiece receiving area (132) comprises at least two workpiece receiving sections (134a, 134b) separate from one another, said workpiece receiving sections being connected to one another via an electrically conductive connecting element (136) and spaced from one another in the longitudinal direction (116) of the workpiece carrier (110).

2. Workpiece carrier as defined in claim 1, **characterized in that** the workpiece receiving area (132) and the conveyor device contact area (114) are electrically insulated from one another.

3. Workpiece carrier as defined in one of claims 1 or 2, **characterized in that** the conveyor device contact area (114) comprises a metallic material.

4. Workpiece carrier as defined in any one of claims 1 to 3, **characterized in that** the conveyor device contact area (114) comprises a material corrosion-resistant in the electrophoretic dip paint bath (104).

5. Workpiece carrier as defined in one of claims 3 or 4, **characterized in that** the conveyor device contact area (114) comprises a stainless steel material.

6. Workpiece carrier as defined in any one of claims 1 to 5, **characterized in that** the workpiece carrier (110) is designed as a skid frame (112) and that the conveyor device contact area (114) comprises at least one supporting surface of a skid runner (120).

7. Workpiece carrier as defined in any one of claims 1 to 6, **characterized in that** the workpiece receiving area (132) comprises a metallic material.

8. Workpiece carrier as defined in any one of claims 1 to 7, **characterized in that** the workpiece receiving area (132) comprises a material adapted to be coated in the electrophoretic dip paint bath (104).

9. Workpiece carrier as defined in any one of claims 1 to 8, **characterized in that** the workpiece receiving area (132) comprises a steel material.

10. Workpiece carrier as defined in any one of claims 1 to 9, **characterized in that** the workpiece receiving area (132) comprises at least one bell-shaped suspension device (152).

11. Workpiece carrier as defined in any one of claims 1 to 10, **characterized in that** the electrically conductive connecting element (136) is designed to be variable in length.

12. Workpiece carrier as defined in any one of claims 1 to 11, **characterized in that** the workpiece carrier (110) comprises at least one electrical insulation (168) comprising a ceramic material.

13. Workpiece carrier as defined in any one of claims 1 to 12, **characterized in that** the workpiece carrier (110) comprises at least one electrical insulation (168) comprising an electrically non-conducting plastic material.

14. Workpiece carrier as defined in claim 13, **characterized in that** the workpiece carrier (110) comprises at least one electrical insulation (168) comprising a polyphenylene sulfide material.

15. Workpiece carrier as defined in any one of claims 1 to 14, **characterized in that** the workpiece carrier (110) comprises at least one electrical insulation (168) stable in the electrophoretic dip paint bath (104) and in a drier following the electrophoretic dip paint bath (104).

16. Paint plant for painting workpieces, in particular vehicle bodies (102), comprising at least one electrophoretic dip paint bath (104), at least one conveyor device following the electrophoretic dip paint bath (104) and at least one workpiece carrier as defined in any one of claims 1 to 15.

17. Paint plant as defined in claim 16, **characterized in that** the paint plant (100) comprises a drier, in addition.

18. Paint plant as defined in one of claims 16 or 17, **characterized in that** the paint plant (100) comprises at least one pretreatment bath.

19. Paint plant as defined in any one of claims 16 to 18, **characterized in that** the conveyor device following the electrophoretic dip paint bath (104) is designed as a roller conveyor (108).

20. Method of painting a workpiece, in particular a vehicle body (102), comprising the following method steps:
- Attaching the workpiece to a workpiece carrier (110);
- conveying the workpiece held on the workpiece carrier (110) through at least one electrophoretic dip paint bath (104), wherein a coating current is passed into the workpiece via at least one electrical contacting device (162) of the workpiece carrier (110);
- subsequently conveying the workpiece held on the workpiece carrier (110) by means of a conveyor device, the workpiece carrier (110) coming into contact with said conveyor device at at least one contact surface (122);
wherein a workpiece carrier (110) is used, at least one contact surface (122) thereof being electrically insulated from the at least one contacting device (162), and said carrier comprising a workpiece receiving area (132), the workpiece being held thereon, and a conveyor device contact area (114) having at least one contact surface (122), the workpiece carrier (110) coming into contact with the conveyor device following the electrophoretic dip paint bath (104) at said surface,
**characterized in that** a workpiece receiving area (132) is used, said area comprising at least two workpiece receiving sections (134a, 134b) separate from one another, said workpiece receiving sections being connected to one another via an electrically conductive connecting element (136) and spaced from one another in the longitudinal direction (116) of the workpiece carrier (110).

21. Method as defined in claim 20, **characterized in that** the workpiece receiving area (132) and the conveyor device contact area (114) are electrically insulated from one another.

22. Method as defined in one of claims 20 or 21, **characterized in that** the conveyor device contact area (114) comprises a metallic material.

23. Method as defined in any one of claims 20 to 22, **characterized in that** the conveyor device contact area (114) comprises a material corrosion-resistant in the electrophoretic dip paint bath (104).

24. Method as defined in one of claims 22 or 23, **characterized in that** the conveyor device contact area (114) comprises a stainless steel material.

25. Method as defined in any one of claims 20 to 24, **characterized in that** a workpiece carrier (110) designed as a skid frame (112) is used and that the conveyor device contact area (114) comprises at least one supporting surface of a skid runner (120).

26. Method as defined in any one of claims 20 to 25, **characterized in that** the workpiece receiving area (132) comprises a metallic material.

27. Method as defined in any one of claims 20 to 26, **characterized in that** the workpiece receiving area (132) is coated in the electrophoretic dip paint bath (104) at least partially.

28. Method as defined in any one of claims 20 to 27, **characterized in that** the workpiece receiving area (132) comprises a steel material.

29. Method as defined in any one of claims 20 to 28, **characterized in that** the workpiece receiving area (132) comprises at least one bell-shaped suspension device (152).

30. Method as defined in any one of claims 20 to 29, **characterized in that** an electrically conductive connecting element (136) variable in length is used.

31. Method as defined in any one of claims 20 to 30, **characterized in that** the workpiece carrier (110) comprises at least one electrical insulation (168) comprising a ceramic material.

32. Method as defined in any one of claims 20 to 31, **characterized in that** the workpiece carrier (110) comprises at least one electrical insulation (168) comprising an electrically non-conducting plastic material.

33. Method as defined in claim 32, **characterized in that** the workpiece carrier (110) comprises at least one electrical insulation (168) comprising a polyphenylene sulfide material.

34. Method as defined in any one of claims 20 to 33, **characterized in that** the workpiece carrier (110) comprises at least one electrical insulation (168) stable in the electrophoretic dip paint bath (104) and in a drier following the electrophoretic dip paint bath (104).

35. Method as defined in any one of claims 20 to 34, **characterized in that** the workpieces held on the workpiece carrier (110) are conveyed to a drier following the electrophoretic dip paint bath (104) by means of the conveyor device, the workpiece carrier (110) coming into contact with said device at at least one contact surface (122).

36. Method as defined in any one of claims 20 to 35, **characterized in that** the workpiece held on the workpiece carrier (110) is conveyed through at least one pretreatment bath prior to passing through the electrophoretic dip paint bath (104).

37. Method as defined in any one of claims 20 to 36, **characterized in that** the workpiece held on the workpiece carrier (110) is conveyed by means of a roller conveyor (108) after passing through the electrophoretic dip paint bath (104).

## Revendications

1. Porte-pièce pour le transport d'une pièce à peindre, en particulier d'une carrosserie de véhicule (102), par au moins un bain de peinture électrophorétique par immersion (104) et à l'aide d'au moins un dispositif de transport succédant au bain de peinture électrophorétique par immersion (104),
comprenant au moins un dispositif d'établissement de contact (162) électrique pour l'introduction d'un courant de revêtement dans la pièce lors du transport de la pièce par le bain de peinture électrophorétique par immersion (104) et au moins une surface de contact (122), sur laquelle le porte-pièce (110) entre en contact avec le dispositif de transport succédant au bain de peinture électrophorétique par immersion (104),
au moins une surface de contact (122) étant isolée électriquement de l'au moins un dispositif d'établissement de contact (162) et
le porte-pièce (110) comprenant une zone de réception de pièce (132) sur laquelle est maintenue la pièce et une zone de contact de dispositif de transport (114) qui présente au moins une surface de contact (122) sur laquelle le porte-pièce (110) entre en contact avec le dispositif de transport succédant au bain de peinture électrophorétique par immersion (104), **caractérisé en ce**
**que** la zone de réception de pièce (132) comprend au moins deux sections de logement de pièce (134a, 134b) séparées l'une de l'autre qui sont reliées par un élément de liaison (136) électroconducteur et sont espacées dans le sens longitudinal (116) du porte-pièce (110) l'une de l'autre.

2. Porte-pièce selon la revendication 1, **caractérisé en ce que** la zone de réception de pièce (132) et la zone de contact du dispositif de transport (114) sont isolées électriquement l'une de l'autre.

3. Porte-pièce selon l'une quelconque des revendications 1 ou 2, **caractérisé en ce que** la zone de contact du dispositif de transport (114) comprend un matériau métallique.

4. Porte-pièce selon l'une quelconque des revendications 1 à 3, **caractérisé en ce que** la zone de contact du dispositif de transport (114) comprend un matériau résistant à la corrosion dans le bain de peinture électrophorétique par immersion (104).

5. Porte-pièce selon l'une quelconque des revendications 3 ou 4, **caractérisé en ce que** la zone de contact du dispositif de transport (114) comprend un matériau en acier spécial.

6. Porte-pièce selon l'une quelconque des revendications 1 à 5, **caractérisé en ce que** le porte-pièce (110) est réalisé comme un cadre antidérapant (112) et **en ce que** la zone de contact du dispositif de transport (114) comprend au moins une surface d'appui d'une barre antidérapante (120).

7. Porte-pièce selon l'une quelconque des revendications 1 à 6, **caractérisé en ce que** la zone de réception de pièce (132) comprend un matériau métallique.

8. Porte-pièce selon l'une quelconque des revendications 1 à 7, **caractérisé en ce que** la zone de réception de pièce (132) comprend un matériau pouvant être revêtu dans le bain de peinture électrophorétique par immersion (104).

9. Porte-pièce selon l'une quelconque des revendications 1 à 8, **caractérisé en ce que** la zone de réception de pièce (132) comprend un matériau en acier.

10. Porte-pièce selon l'une quelconque des revendications 1 à 9, **caractérisé en ce que** la zone de réception de pièce (132) comprend au moins un dispositif de suspension (152) en forme de cloche.

11. Porte-pièce selon l'une quelconque des revendications 1 à 10, **caractérisé en ce que** l'élément de liaison (136) électroconducteur est réalisé de manière variable en longueur.

12. Porte-pièce selon l'une quelconque des revendications 1 à 11, **caractérisé en ce que** le porte-pièce (110) comprend au moins une isolation électrique (168) qui comporte un matériau céramique.

13. Porte-pièce selon l'une quelconque des revendications 1 à 12, **caractérisé en ce que** le porte-pièce (110) comporte au moins une isolation électrique (168) qui comporte un matériau plastique non électroconducteur.

14. Porte-pièce selon la revendication 13, **caractérisé en ce que** le porte-pièce (110) comporte au moins une isolation électrique (168) qui comporte un matériau de polysulfure de phénylène.

15. Porte-pièce selon l'une quelconque des revendications 1 à 14, **caractérisé** le porte-pièce (110) comporte au moins une isolation électrique (168) qui est résistante dans le bain de peinture électrophorétique par immersion (104) et dans un sécheur succédant au bain de peinture électrophorétique par immersion (104).

16. Installation de peinture pour la peinture de pièces, en particulier de carrosseries de véhicule (102), comprenant au moins un bain de peinture électrophorétique par immersion (104), au moins un dispositif de transport succédant au bain de peinture électrophorétique par immersion (104) et au moins un porte-pièce selon l'une quelconque des revendications 1 à 15.

17. Installation de peinture selon la revendication 16, **caractérisée en ce que** l'installation de peinture (100) comprend de plus un sécheur.

18. Installation de peinture selon l'une quelconque des revendications 16 ou 17, **caractérisée en ce que** l'installation de peinture (100) comporte au moins un bain de prétraitement.

19. Installation de peinture selon l'une quelconque des revendications 16 à 18, **caractérisée en ce que** le dispositif de transport succédant au bain de peinture électrophorétique par immersion est réalisé comme un transporteur à rouleaux (108).

20. Procédé de peinture d'une pièce, en particulier d'une carrosserie de véhicule (102), comprenant les étapes de procédé suivantes :
- fixation de la pièce sur un porte-pièce (110) ;
- transport de la pièce maintenue sur le porte-pièce (110) par au moins un bain de peinture électrophorétique par immersion (104), un courant de revêtement étant introduit par au moins un dispositif d'établissement de contact électrique (162) du porte-pièce (110) dans la pièce ;
- transport suivant de la pièce maintenue sur le porte-pièce (110) à l'aide d'un dispositif de transport, avec lequel le porte-pièce (110) entre en contact sur au moins une surface de contact (122) ;
un porte-pièce (110) étant utilisé, pour lequel au moins une surface de contact (122) est isolée électriquement de l'au moins un dispositif d'établissement de contact (162) et qui comporte une zone de réception de pièce (132) sur laquelle est maintenue la pièce, et une zone de contact de dispositif de transport (114) qui présente au moins une surface de contact (122), sur laquelle le porte-pièce (110) entre en contact avec le dispositif de transport succédant au bain de peinture électrophorétique par immersion (104), **caractérisé en ce**
**qu'**une zone de réception de pièce (132) est utilisée, laquelle comprend au moins deux sections de réception de pièce (134a, 134b) séparées l'une de l'autre, qui sont reliées par un élément de liaison (136) électroconducteur et sont espacées dans le sens longitudinal (116) du porte-pièce (110) l'une de l'autre.

21. Procédé selon la revendication 20, **caractérisé en ce que** la zone de réception de pièce (132) et la zone de contact de dispositif de transport (114) sont isolées électriquement l'une de l'autre.

22. Procédé selon l'une quelconque des revendications 20 ou 21, **caractérisé en ce que** la zone de contact de dispositif de transport (114) comporte un matériau métallique.

23. Procédé selon l'une quelconque des revendications 20 à 22, **caractérisé en ce que** la zone de contact du dispositif de transport (114) comporte un matériau résistant à la corrosion dans le bain de peinture électrophorétique par immersion (104).

24. Procédé selon l'une quelconque des revendications 22 ou 23, **caractérisé en ce que** la zone de contact du dispositif de transport (114) comporte un matériau en acier spécial.

25. Procédé selon l'une quelconque des revendications 20 à 24, **caractérisé en ce qu'**un porte-pièce (110) réalisé comme un cadre antidérapant (112) est utilisé et **en ce que** la zone de contact de dispositif de transport (114) comporte au moins une surface d'appui pour une barre antidérapante (120).

26. Procédé selon l'une quelconque des revendications 20 à 25, **caractérisé en ce que** la zone de réception de pièce (132) comporte un matériau métallique.

27. Procédé selon l'une quelconque des revendications 20 à 26, **caractérisé en ce que** la zone de réception de pièce (132) est revêtue au moins en partie dans le bain de peinture électrophorétique par immersion (104).

28. Procédé selon l'une quelconque des revendications 20 à 27, **caractérisé en ce que** la zone de réception de pièce (132) comporte un matériau en acier.

29. Procédé selon l'une quelconque des revendications 20 à 28, **caractérisé en ce que** la zone de réception de pièce (132) comporte au moins un dispositif de suspension (152) en forme de cloche.

30. Procédé selon l'une quelconque des revendications 20 à 29, **caractérisé en ce qu'**un élément de liaison (136) électroconducteur, de longueur variable, est utilisé.

31. Procédé selon l'une quelconque des revendications 20 à 30, **caractérisé en ce que** le porte-pièce (110) comporte au moins une isolation électrique (168) qui comporte un matériau céramique.

32. Procédé selon l'une quelconque des revendications 20 à 31, **caractérisé en ce que** le porte-pièce (110) comporte au moins une isolation électrique (168) qui comporte un matériau plastique non électroconducteur.

33. Procédé selon la revendication 32, **caractérisé en ce que** le porte-pièce (110) comporte au moins une isolation électrique (168) qui comporte un matériau de polysulfure de phénylène.

34. Procédé selon l'une quelconque des revendications 20 à 33, **caractérisé en ce que** le porte-pièce (110) comporte une isolation électrique (168) qui est résistante dans le bain de peinture électrophorétique par immersion (104) et dans un sécheur succédant au bain de peinture électrophorétique par immersion (104).

35. Procédé selon l'une quelconque des revendications 20 à 34, **caractérisé en ce que** les pièces maintenues sur le porte-pièce (110) sont transportées à l'aide du dispositif de transport avec lequel le porte-pièce (110) entre en contact sur au moins une surface de contact (122), vers un sécheur succédant au bain de peinture électrophorétique par immersion (104).

36. Procédé selon l'une quelconque des revendications 20 à 35, **caractérisé en ce que** la pièce maintenue sur le porte-pièce (110) est transportée avant le passage du bain de peinture électrophorétique par immersion (104) par au moins un bain de prétraitement.

37. Procédé selon l'une quelconque des revendications 20 à 36, **caractérisé en ce que** la pièce maintenue sur le porte-pièce (110) est transportée après le passage du bain de peinture électrophorétique par immersion (104) à l'aide d'un transporteur à rouleaux (108).
